# EUROPEAN PATENT APPLICATION

(11) **EP 1 406 416 A1**
(43) Date of publication of application: **07.04.2004**
(21) Application number: 03256241.5
(22) Date of filing: 02.10.2003
(51) Int. Cl.: H04L 12/28, H04Q 7/30

(54) **Apparatus, access system and method for splitting access point functionality between a centralised access point and a plurality of less complex radio access points**

(30) Priority: 03.10.2002 US 263860
(71) Applicant: Agere Systems Inc., Allentown, PA 18109 (US)
(72) Inventor: Butler, Jerry, Gainesville GA 30504 (US); Shelby, Kevin A., Marietta Georgia 30066 (US); Weinstein, Randall Kenneth, Atlanta Georgia 30319 (US); Williams, Kirk Dion, Kennesaw Georgia 30152 (US)
(74) Representative: Williams, David John

(57) **Abstract**

A centralized concentrator (140) for use with a computer network and a method of distributing wireless communications in a computer network employing a distributed access system (120). In one embodiment, the centralized concentrator (140) includes a wireless communicator and a central protocol processor. The wireless communicator sends and receives a wireless communication to a communications network (160) and to a wireless client access subsystem (120). Coupled to the wireless communicator is the central protocol processor which provides bridge functionality for the wireless communication.

## Description

### TECHNICAL FIELD OF THE INVENTION

The present invention is directed, in general, to communication systems and, more specifically, to a centralized concentrator for use with a computer network, a method of distributing wireless communications and a distributed access system employing the same.

### BACKGROUND OF THE INVENTION

Computer systems configured as local area networks have been common for nearly two decades and are popular in a wide variety of business and educational applications. The most common local area networks include a number of processing devices and a server that are coupled together by a hardwired connection. Since about 1990, however, wireless local area networks have become more common in the marketplace. Although the concept behind wireless local area networks had been described a decade earlier, interest in local area networks was limited until the release of the 2.4 GHz unlicensed band for industrial, scientific and medical ("ISM") applications. Wireless local area networks products most often employ either direct sequence spread spectrum ("DSSS") or frequency-hopping spread spectrum ("FHSS") techniques to communicate between roaming mobile stations, also known as clients, and network access points.

In a typical wireless computer network environment, the "backbone" of the local area networks takes the form of one or more central servers that communicate with a number of network access points through a hardwired connection. Each access point includes a transceiver for communicating with at least one client. The client may be a mobile telephone, a personal digital assistant, a point-of-sale terminal (*e.g.*, an electronic cash register), a bar code reader or other scanning device, or a notepad, desktop or laptop computer. Each client establishes a communication link with an access point by scanning the ISM band to find an available access point. Once a reliable link is established, the client is able to interact with other clients, a server or both. This allows the client to be freely moved in the office, factory, hospital or other facility where the wireless local area network is based, without the length of a hardwired connection to the local area network limiting the movement.

Presently, wireless access points are self-contained entities that terminate the wireless networking protocol prior to distribution on the wired network. Existing access points also include added functionality in addition to terminating wireless network protocols or packets. For example, the access points may also provide encryption and decryption, user authentication, key exchange and information base management.

The added processing functionality of the access points increases the cost and complexity to the wireless computer network. This cost is multiplied when additional access points are added to the wireless local area networks. In addition, complexity of the wireless local area networks increases when upgrades such as enhanced security are added to the network. Typically, each access point should be upgraded with each of the changes. Therefore, the cost and complexity of existing access points increase the difficulty for customers to expand or improve their existing wireless local area networks.

Accordingly, what is needed in the art is a network configuration that overcomes the deficiencies of the prior art while maintaining the advantages associated with computer networks.

### SUMMARY OF THE INVENTION

To address the above-discussed deficiencies of the prior art, the present invention provides a centralized concentrator for use with a computer network. In one embodiment, the centralized concentrator includes a wireless communicator and a central protocol processor. The wireless communicator is configured to send and receive a wireless communication to a communications network and to a wireless client access subsystem. Coupled to the wireless communicator is the central protocol processor which is configured to provide bridge functionality for the wireless communication.

Preferably the central protocol processor provides the bridge functionality by maintaining a location table.

Preferably the central protocol processor is further configured to provide a feature set for the wireless client access subsystem.

Preferably the central protocol processor is further configured to provide additional functionality by employing at least one processing function selected from the group consisting of: a user authentication, an encryption key distribution, and an Internet Protocol proxy.

Preferably the central protocol processor is further configured to convert between a wireless protocol and a wired protocol.

Preferably the wireless communicator includes a switch coupler and a packet communicator.

Preferably the central protocol processor is further configured to provide an application environment for the wireless client access subsystem.

In another aspect, the present invention provides a method of distributing wireless communications in a computer network. The method includes sending and receiving wireless communications employing a wireless client access subsystem. The method also includes providing centralized bridge functionality for the wireless communications employing a centralized concentrator subsystem.

Preferably the providing includes maintaining a location table.

Preferably the method of distributing wireless communications in a computer network further comprises providing a centralized feature set.

Preferably the method of distributing wireless communications in a computer network further comprises providing power to the wireless client access subsystem from the centralized concentrator subsystem.

Preferably the method of distributing wireless communications in a computer network further comprises providing at least one processing function selected from the group consisting of: a user authentication, an encryption key distribution, and an Internet Protocol proxy.

Preferably the centralized concentrator subsystem is wirelessly coupled to the wireless client access subsystem.

Preferably the centralized concentrator subsystem converts between a wireless protocol and a wired protocol.

In yet another aspect of the present invention there is provided a distributed access system for use with a computer network. The distributed access system comprises a wireless client access subsystem that sends and receives a wireless communication associated with a client. The distributed access system further comprises a centralized concentrator subsystem, coupled to the wireless client access subsystem. The centralized concentrator subsystem includes a wireless communicator that sends and receives said wireless communication to a communications network and to the wireless client access subsystem. The centralized concentrator subsystem also includes a central protocol processor, coupled to the wireless communicator, configured to provide bridge functionality for the wireless communication.

Preferably the centralized concentrator subsystem provides the bridge functionality by maintaining a location table.

Preferably the centralized concentrator subsystem further provides a feature set for the wireless client access subsystem.

Preferably the centralized concentrator subsystem further provides power to the wireless client access subsystem.

Preferably the centralized concentrator subsystem further provides additional functionality by employing at least one processing function selected from the group consisting of: a user authentication, an encryption key distribution, and an Internet Protocol proxy.

Preferably the centralized concentrator subsystem is wirelessly coupled to the wireless client access subsystem.

Preferably the centralized concentrator subsystem further converts between a wireless protocol and a wired protocol.

The foregoing has outlined, rather broadly, preferred and alternative features of the present invention so that those skilled in the art may better understand the detailed description of the invention that follows. Additional features of the invention will be described hereinafter that form the subject of the claims of the invention. Those skilled in the art should appreciate that they can readily use the disclosed conception and specific embodiment as a basis for designing or modifying other structures for carrying out the same purposes of the present invention. Those skilled in the art should also realize that such equivalent constructions do not depart from the spirit and scope of the invention in its broadest form.

### BRIEF DESCRIPTION OF THE DRAWINGS

For a more complete understanding of the present invention, reference is now made to the following descriptions taken in conjunction with the accompanying drawings, in which:
FIGURE 1 illustrates a system diagram of an embodiment of a computer network constructed in accordance with the principals of the present invention;
FIGURE 2 illustrates a block diagram of an embodiment of a distributed access system constructed in accordance with the principles of the present invention; and
FIGURE 3 illustrates a flow diagram of an embodiment of a method of distributing wireless communications in a computer network, constructed in accordance with the principles of the present invention.

### DETAILED DESCRIPTION

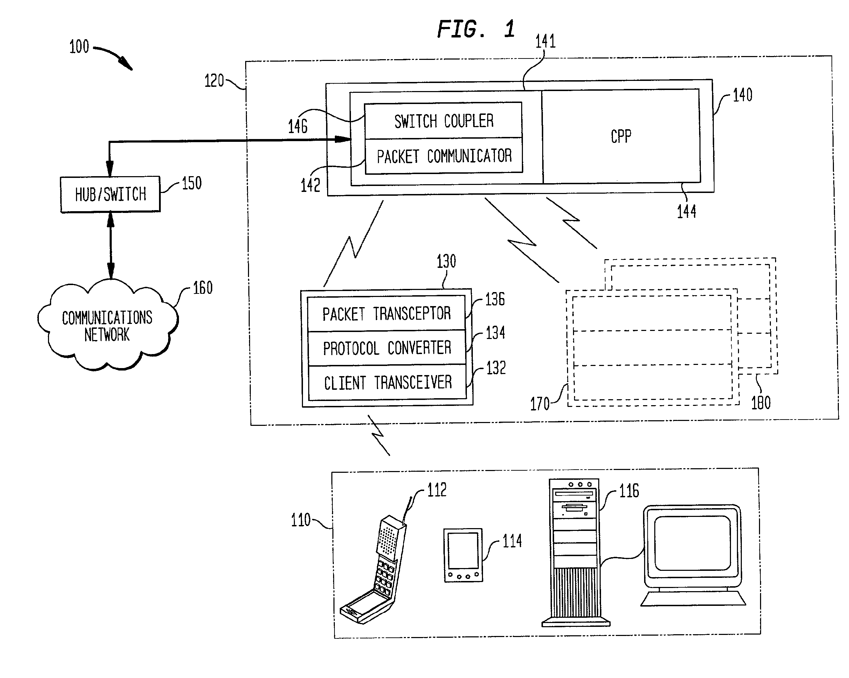

Referring initially to FIGURE 1, illustrated is a system diagram of an embodiment of a computer network, generally designated 100, constructed in accordance with the principals of the present invention. The computer network 100 may form a wireless local area network and includes a client 110, a distributed access system 120, and a hub/switch 150 coupled to a communications network 160. The client 110 includes a mobile telephone 112, a personal digital assistant 114 and a computer 116. The distributed access system 120 includes a wireless client access subsystem 130 and a centralized concentrator subsystem (synonymously referred to as a centralized concentrator) 140. The wireless client access subsystem 130 includes a client transceiver 132, a protocol converter 134 and a packet transceptor 136. Additionally, the centralized concentrator subsystem 140 includes a wireless communicator 141 and a central protocol processor 144. The wireless communicator 141 includes a packet communicator 142 and a switch coupler 146.

Typically, the distributed access system 120 will include more than one wireless client access subsystem 130 as represented in FIGURE 1 by additional wireless client access subsystems 170, 180. One skilled in the pertinent art will understand that the following discussion of the wireless client access subsystem 130 may also apply to additional wireless client access subsystems 170, 180.

The client 110 transmits and receives a wireless communication with the distributed access system 120 through the wireless client access subsystem 130. The wireless communication is associated with the client 110. It may be a data packet that originates from or being sent to the client 110. The wireless communication may have a wireless protocol or a hardwired protocol depending on the location of the wireless communication within the computer network 100.

In the illustrated embodiment, the client 110 communicates with the distributed access system 120 using a conventional wireless signal. Typically, the client 110 transmits and receives the wireless communication with the distributed access system 120 according to Institute of Electrical and Electronic Engineers ("IEEE") standard 802.11, which is incorporated herein by reference. In an exemplary embodiment, the distributed access system 120 transmits and receives the wireless communication with the client 110 via a 2.4 GHz connection. Of course in other embodiments, the distributed access system 120 and the client 110 may be connected employing another frequency and in compliance with another standard.

As illustrated in FIGURE 1, the client 110 may be the mobile telephone 112. The mobile telephone 112 may be a conventional mobile telephone that is also capable of transmitting and receiving wireless communications via a radio frequency.

Also illustrated in FIGURE 1, the client 110 may be the personal digital assistant 114. Those skilled in the pertinent art are familiar with personal digital assistants, such as those commercially available from Palm™ by Palm Inc. of Santa Clara, California, Handspring™ by Handspring, Inc. of Mountain View, California or other suppliers. Any personal digital assistant employed in the illustrated embodiment is equipped to transmit and receive wireless communications.

As illustrated, the client 110 may also be the computer 116. The computer 116 may be a conventional desktop computer that is capable of communicating data through a radio system. In an exemplary embodiment, the computer 116 may be a conventional laptop computer capable of transmitting and receiving wireless communications. Of course, there are many other wireless devices capable of transmitting and receiving wireless communications that may also be used as the client 110, and fall within the broad scope of the present invention.

The distributed access system 120, as stated above, includes the wireless client access subsystem 130 and the centralized concentrator subsystem 140. The wireless client access subsystem 130 sends and receives the wireless communications associated with the client 110. Essentially, the wireless client access subsystem 130 provides a conduit for wireless communications between the client 110 and the distributed access system 120. The wireless client access subsystem 130 provides processing to send wireless communications between the client 110 and the centralized concentrator subsystem 140.

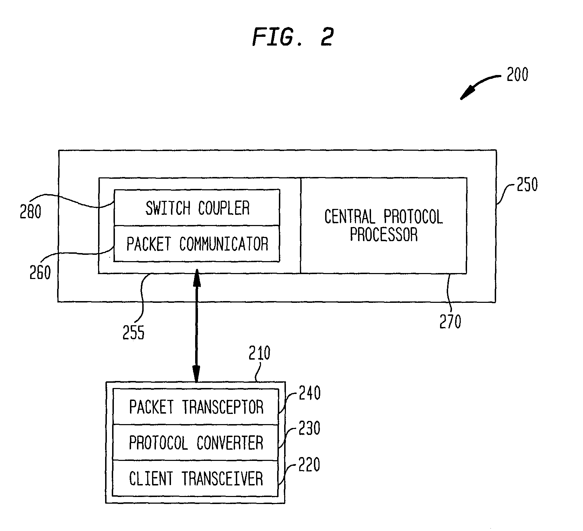

The client transceiver 132 of the wireless client access subsystem 130 typically receives and transmits the wireless communications via a radio frequency. The protocol converter 134 converts between a wireless protocol and a wired protocol. The packet transceptor 136 sends and receives the wireless communications between the wireless client access subsystem 130 and the centralized concentrator subsystem 140. The distributed access system 120, including the wireless client access subsystem 130 and the centralized concentrator subsystem 140, will be discussed in more detail with respect to FIGURE 2.

In the illustrated embodiment, the wireless client access subsystem 130 is wirelessly coupled to the centralized concentrator subsystem 140. In other embodiments, the wireless client access subsystem 130 may be coupled to the centralized concentrator subsystem 140 via a hardwired connection such as a conventional cable. In some embodiments, the wireless client access subsystem 130 may also be provided power via a communication cable. For example, a Category 5 ("CAT5") cable that may be used to provide a hardwired connection for communication between the wireless client access subsystem 130 and the centralized concentrator subsystem 140 may also provide power to the wireless client access subsystem 130. In other embodiments, the wireless client access subsystem 130 may be provided power remotely from the centralized concentrator subsystem 140. For example, the wireless client access subsystem 130 may be provided power from a conventional 120V power outlet which may be remote from the central concentrator subsystem 140. Additionally, the wireless client access subsystem 130 may be provided power from an external battery source.

The centralized concentrator subsystem 140 provides bridge functionality for the wireless communications. The bridge functionality is a decision making process that determines how the wireless communications are routed through a hardwired and wireless domain associated with the distributed access system 120. The bridge functionality includes determining if a data packet with a hardwired protocol is destined for the client 110 and if a data packet with a wireless protocol is destined for the hub/switch 150. The bridge functionality, for instance, may be a Layer 2 (as defined by the Open Systems Interconnect architecture) bridge functionality. In a preferred embodiment, the centralized concentrator subsystem 140 provides the bridge functionality by maintaining a location table. The location table may be a data table that identifies the location of a client within the distributed access system 120. For example, the location table may be a learning table for address translation used to determine which wireless client access subsystem 130 a client is associated with at any given time.

The centralized concentrator subsystem 140 may also provide a feature set for the wireless client access subsystem 130. A feature set is typically a software package designed to provide a specific benefit for a client. The feature set, for example, may include enhanced security, enhanced load balancing or voice media processing which may be employed by the wireless client access subsystem 130. Locating the bridge functionality and the feature set at a central location instead of in each wireless client access subsystem 130 allows the distributed access system 120 to be easily modified or upgraded.

Additionally, since the bridging functionality is not generally performed at each wireless client access subsystem 130, the cost and complexity of each wireless client access subsystem 130 is reduced. This permits a customer to inexpensively expand the distributed access system 120 by adding additional wireless client access subsystems. Furthermore, the centralized bridging functionality improves the flow of the wireless communications through the wireless client access subsystem 130 as compared to an existing access point by de-emphasizing processor limits of the access point.

The central protocol processor 144 of the centralized concentrator subsystem 140 performs the bridge functionality for the wireless communications that are received through the packet communicator 142 and the switch coupler 146. Examples of processing functions of the bridge functionality operations may include address translation and inter-bridging and distribution of wireless client access subsystems. In the illustrated embodiment, the central protocol processor 144 may also perform a protocol conversion of the wireless communications between a wireless protocol and a wired protocol since the centralized concentrator subsystem 140 may be wirelessly coupled to the wireless client access subsystem 130 and hardwired coupled to the hub/switch 150. One skilled in the art will understand the configuration and control areas to process a wireless communication in the computer network 100.

In the illustrated embodiment, the packet communicator 142 sends and receives the wireless communications between the centralized concentrator subsystem 140 and the wireless client access subsystem 130 via a hardwired connection. In other embodiments, the centralized concentrator subsystem 140 may be wirelessly coupled to the wireless client access subsystem 130. In some embodiments, the centralized concentrator subsystem 140 and the wireless client access subsystem 130 may be wirelessly coupled via a 5 GHz radio system. In yet other embodiments, the centralized concentrator subsystem 140 may be connected to wireless client access subsystem 130 via a hardwired connection and connected to other wireless client access points via a wireless connection.

The switch coupler 146 sends and receives the wireless communications associated with the client 110 between the distributed access system 120 and the communications network 160 via the hub/switch 150. In the illustrated embodiment, the distributed access system 120 and the hub/switch 150 are hardwired coupled. In some embodiments, the distributed access system 120 and the hub/switch 150 may be wirelessly coupled.

The hub/switch 150 is a conventional switch used in computer networks such as a wireless local area network. The hub/switch 150 accommodates wireless communications to and from the distributed access system 120. In one embodiment, the hub/switch 150 may be located remotely from the centralized concentrator subsystem 140 of the distributed access system 120. In other embodiments, the centralized concentrator subsystem 140 may be in close proximity to the hub/switch 150.

In addition to the connection to the distributed access system 120, the hub/switch 150 is typically connected to other networks through conventional ports such as an Ethernet port. In the illustrated embodiment, the hub/switch 150 is connected to the communications network 160. The communications network 160 may be a conventional intranet or the Internet. One skilled in the pertinent art will understand that the hub/switch 150 may be connected through conventional ports to other distributed access systems, an intranet, the Internet and other systems, such as Ethernet systems, at the same time.

Turning now to FIGURE 2, illustrated is a block diagram of an embodiment of a distributed access system, generally designated 200, constructed in accordance with the principles of the present invention. The distributed access system 200 includes a wireless client access subsystem 210 and a centralized concentrator subsystem (synonymously referred to as a centralized concentrator) 250. The wireless client access subsystem 210 includes a client transceiver 220, a protocol converter 230 and a packet transceptor 240. The centralized concentrator subsystem 250 includes a wireless communicator 255 and a central protocol processor 270. The wireless communicator 255 includes a packet communicator 260 and a switch coupler 280. As previously mentioned, the distributed access system 200 will typically include more than one wireless client access subsystem 210. One skilled in the pertinent art will understand that the following discussion of the wireless client access subsystem 210 may also apply to additional wireless client access subsystems that may be included in the distributed access system 200.

The wireless client access subsystem 210 is configured to send and receive a wireless communication associated with a client. The wireless client access subsystem 210 facilitates the movement of the wireless communication through a computer network including a wireless local area network by converting the protocol of the wireless communications to either a wired or wireless protocol as required by a system configuration. In an exemplary embodiment, the wireless client access subsystem 210 may be a dedicated device that is constructed of special-purpose hardware employing a sequence of operating instructions, which directs its operation. The wireless client access subsystem 210 may receive operating power remotely from the centralized concentrator subsystem 250 or may receive operating power through a communication cable connected to, for example, the centralized concentrator subsystem 250.

As mentioned above, the wireless client access subsystem 210 includes the client transceiver 220, the protocol converter 230 and the packet transceptor 240. The client transceiver 220 is the portion of the wireless client access subsystem 210 that transmits and receives wireless communications between the wireless client access subsystem 210 and a client. The client transceiver 220 may be a conventional radio transmitter and receiver. In one embodiment, the client transceiver 220 may be connected to a client via a 2.4 GHz signal. In some embodiments, the physical and Media Access Control ("MAC") of the wireless client access subsystem 210 may be defined by the IEEE standard 802.11.

The protocol converter 230 converts the protocol of the wireless communications received by either the client transceiver 220 or the packet transceptor 240 to a protocol that may be sent by the packet transceptor 240 or transmitted by the client transceiver 220, respectively. The necessity and type of the protocol conversion by the protocol converter 230 is based on the coupling of the wireless client access subsystem 210 to the centralized concentrator subsystem 250 and to the client. For example, in the illustrated embodiment the wireless client access subsystem 210 is coupled to the centralized concentrator subsystem 250 via a hardwired connection. In some embodiments, the wireless client access subsystem 210 may be coupled to the client via a 2.4 GHz connection. Before a wireless communication received from the client via the 2.4 GHz connection may be sent to the centralized concentrator subsystem 250, the protocol converter 230 converts the wireless protocol of the wireless communications to a wired protocol. Likewise, before a wired communication received by the packet transceptor 240 from the centralized concentrator subsystem 250 may be transmitted to the client, the protocol converter 230 converts the wired protocol to a wireless protocol. One skilled in the pertinent are will understand wireless and wired protocols and converting between each one.

As discussed, the packet transceptor 240 sends and receives wireless communications between the wireless client access subsystem 210 and the centralized concentrator subsystem 250. In the illustrated embodiment, the wireless client access subsystem 210 is coupled to the centralized concentrator subsystem 250 via a hardwired connection. In other embodiments, the wireless client access subsystem 210 may be wirelessly coupled to the centralized concentrator subsystem 250. In one embodiment, the wireless client access subsystem 210 and the centralized concentrator subsystem 250 may be wirelessly coupled by a 5 GHz signal.

The packet communicator 260 sends and receives wireless communications between the wireless client access subsystem 210 and the centralized concentrator subsystem 250. As discussed above with respect to packet transceptor 240, the centralized concentrator subsystem 250 may send and receive wireless communications with the wireless client access subsystem 210 via either a wireless or a wired connection. In some embodiments, the packet communicator 260 may send and receive wireless communications by employing both wireless couplings and hardwired couplings to various individual wireless client access subsystems as appropriate.

The centralized concentrator subsystem 250 is configured to provide bridge functionality for the wireless communications. For example, the centralized concentrator subsystem 250 may employ processing functions such as address translation and inter-wireless client access subsystem bridging and distribution. In one embodiment, the centralized concentrator subsystem 250 may provide bridge functionality by maintaining a location table. The central protocol processor 270 of the centralized concentrator subsystem 250 provides the bridge functionality for the wireless communications that are received through the packet communicator 260 and the switch coupler 280. The central protocol processor 270 may also provide centralized configuration and control that may allow centralized system maintenance and centralized subscriber management.

In addition, the central protocol processor 270 may also provide additional functionality for the wireless client access subsystem 210. For example, the central protocol processor 270 may provide user authentication, encryption key distribution and Internet Protocol proxy. The central protocol processor 270 may also provide different application environments, such as nomadic and hereUare, for specific installations of the wireless client access subsystem 210. An application environment is software, hardware or a combination thereof which enables a software program to operate within a wireless environment. Furthermore, the central protocol processor 270 may contain different feature sets such as enhanced security and streaming media processing.

The centralized concentrator subsystem 250 also sends and receives wireless communications with a communications network via the switch coupler 280. The switch coupler 280 may send and receive wireless communications with the communications network via a hub/switch through a hardwired connection. In other embodiments, the centralized concentrator subsystem 250 may be wirelessly connected to the hub/switch.

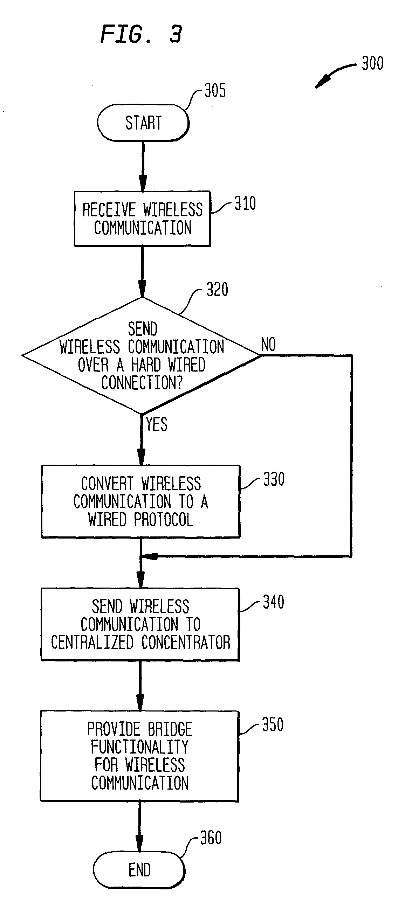

Turning now to FIGURE 3, illustrated is a flow diagram of an embodiment of a method, generally designated 300, of distributing wireless communications in a computer network, constructed in accordance with the principles of the present invention. The method 300 starts in a step 305 with an intent to distribute a wireless communication in a computer network.

After starting, a wireless client access subsystem receives a wireless communication in a step 310. In one embodiment, the wireless communication may have been received from a client via a 2.4 GHz connection according to the IEEE 802.11 standard. In other embodiments, the wireless communication may have been received over another radio frequency or in accordance with another standard.

After receiving the wireless communication, a determination is made if the wireless communication will be sent via a hardwired connection in a first decisional step 320. In some embodiments, the wireless client access subsystem may be connected to centralized concentrator subsystem via a hardwired connection. If so, the protocol of the wireless communication received through a radio system will be converted from a wireless protocol to a wired protocol before being sent to the centralized concentrator subsystem. If the centralized concentrator subsystem is wirelessly coupled to the wireless client access subsystem, the protocol of the wireless communication received through the radio system should not be changed. One skilled in the art, however, will understand that some protocol processing may still be necessary when sending the wireless communication at another radio frequency.

If it is determined that the wireless communication will be sent via a hardwired connection, then the protocol of the wireless communication is converted to a wired protocol in a step 330. One skilled in the art will understand the conversion of wireless protocols to wired protocols and vice versa. This conversion is commonly performed in existing wireless local area networks. In other embodiments, the method 300 may require a protocol conversion from a wired protocol to a wireless protocol.

After converting the protocol, the wireless communication is sent to a centralized concentrator subsystem in a step 340. The wireless communication may be sent to the centralized concentrator subsystem via a wireless connection. In some embodiments the wireless connection may employ a 5 GHz signal.

The centralized concentrator subsystem then provides centralized bridge functionality for the wireless communication in a step 350. In some embodiments, the centralized concentrator subsystem may contain software that directs the bridge functionality for the wireless communication. For example, the bridge functionality may be provided by maintaining a location table. In one embodiment, the centralized concentrator subsystem may include the bridge functionality present in OriNOCO™ wireless networking and Internet access systems, which is commercially available from Agere Systems, Inc. of Allentown, Pennsylvania. In another embodiment, a centralized feature set may be provided for employment by the wireless client access subsystem. In yet another embodiment, additional centralized functionality may be provided for the wireless client access subsystem through additional processing such as user authentication, encryption key distribution and Internet Protocol proxy. Finally, the distribution of wireless communication ends in a step 360. Returning now to the first decisional step 320, if the wireless communication will not be sent via a hardwired connection, then the method 300 proceeds to step 340 and continues as before.

Although the present invention has been described in detail, those skilled in the art should understand that they can make various changes, substitutions and alterations herein without departing from the spirit and scope of the invention in its broadest form.

## Claims

1. A centralized concentrator for use with a computer network, comprising:
a wireless communicator configured to send and receive a wireless communication to a communications network and to a wireless client access subsystem; and
a central protocol processor, coupled to said wireless communicator, configured to provide bridge functionality for said wireless communication.

2. The centralized concentrator as recited in Claim 1 wherein said central protocol processor provides said bridge functionality by maintaining a location table.

3. The centralized concentrator as recited in Claim 1 wherein said central protocol processor is further configured to provide a feature set for said wireless client access subsystem.

4. The centralized concentrator as recited in Claim 1 wherein said central protocol processor is further configured to provide additional functionality by employing at least one processing function selected from the group consisting of:
a user authentication,
an encryption key distribution, and
an Internet Protocol proxy.

5. The centralized concentrator as recited in Claim 1 wherein said central protocol processor is further configured to convert between a wireless protocol and a wired protocol.

6. The centralized concentrator as recited in Claim 1 wherein said central protocol processor is further configured to provide an application environment for said wireless client access subsystem.

7. A method of distributing wireless communications in a computer network, comprising:
sending and receiving wireless communications employing a wireless client access subsystem; and
providing centralized bridge functionality for said wireless communications employing a centralized concentrator subsystem.

8. The method as recited in Claim 7 further comprising providing a centralized feature set.

9. A distributed access system for use with a computer network, comprising:
a wireless client access subsystem that sends and receives a wireless communication associated with a client; and
a centralized concentrator subsystem, coupled to said wireless client access subsystem, including:
a wireless communicator that sends and receives said wireless communication to a communications network and to said wireless client access subsystem, and
a central protocol processor, coupled to said wireless communicator, configured to provide bridge functionality for said wireless communication.

10. The distributed access system as recited in Claim 9 wherein said centralized concentrator subsystem is wirelessly coupled to said wireless client access subsystem.
